# EUROPEAN PATENT SPECIFICATION

(11) **EP 3 480 507 B1**
(45) Date of publication and mention of the grant of the patent: **03.03.2021**
(21) Application number: 17819905.5
(22) Date of filing: 16.06.2017
(51) Int. Cl.: B32B 5/00, C01B 33/14, C04B 38/00, C04B 16/06, C04B 14/38, F16L 59/02

(54) **INSULATING MATERIAL AND EQUIPMENT USING INSULATING MATERIAL**
ISOLIERMATERIAL UND EQUIPMENT MIT ISOLIERMATERIAL
MATÉRIAU ISOLANT ET ÉQUIPEMENT UTILISANT UN MATÉRIAU ISOLANT

(30) Priority: 01.07.2016 JP 2016131180
(43) Date of publication of application: 08.05.2019
(73) Proprietor: Panasonic Intellectual Property Management Co., Ltd., Osaka-shi, Osaka 540-6207 (JP)
(72) Inventor: OIKAWA Kazuma, Osaka-shi, Osaka 540-6207 (JP); TOYOTA Kei, Osaka-shi, Osaka 540-6207 (JP); OKADA Shinji, Osaka-shi, Osaka 540-6207 (JP); SAKATANI Shigeaki, Osaka-shi, Osaka 540-6207 (JP)
(74) Representative: Vigand, Philippe
(86) International application number: PCT/JP2017/022303
(87) International publication number: WO 2018/003545

(56) References cited:
- WO-A1-2014/132652
- JP-A- 2004 340 420
- JP-A- 2009 275 857
- JP-A- 2009 299 893
- JP-A- 2011 136 859
- JP-A- 2012 211 697
- JP-A- 2014 035 042
- JP-A- 2014 529 519
- DATABASE WPI Week 201149 Thomson Scientific, London, GB; AN 2011-H79392 XP002790844, -& JP 2011 136859 A (ASAHI FIBREGLASS KK) 14 July 2011 (2011-07-14)

## Description

### TECHNICAL FIELD

The technical field relates to an insulating material, and to a equipment using the insulating material. Particularly, the technical field relates to a flame-retardant insulating material, and to a equipment using such an insulating material.

### BACKGROUND

Silica aerogel is a known insulating material. Silica aerogel is produced by sol-gel reaction of raw material water glass (a sodium silicate aqueous solution) and alkoxysilane (e.g., tetramethoxysilane (TEOS)). Because silica aerogel has a point-contact network structure of silica particles measuring several tens of nanometers in size, this material is brittle and fragile. In order to overcome the weakness of silica aerogel, there have been attempts to improve strength by combining silica aerogel with other materials such as fibers, nonwoven fabrics, and resins.

For example, a composite material of silica aerogel and fiber is known that is produced by spraying a granular silica aerogel produced from alkoxysilane and having a thermal conductivity of 23 mW/mK onto a two-component fiber material of a low-melting-point fiber and a high-melting-point fiber, and thermally compressing the composite of these materials under high temperature (PTL1). In this method, the low-melting-point fiber is thermally compressed at a temperature equal to or greater than the melting point of the fiber to bind the fiber to the silica aerogel, and the technique successfully reduces detachment of aerogel more effectively than conventionally achieved.

There is also a report of an insulating coating material containing a low-density powder material and a water-soluble polymer solution, the low-density powder material being a powder material containing a porous powder such as silica aerogel. A thin insulating material produced by applying the insulating coating material to a base material is also reported. For example, a low-density powder (silica aerogel) is mixed with a several ten weight% PVA aqueous solution to prepare an insulating coating material. The coating material is then applied to copy paper to form a 10 µm-thick coating material layer, and another sheet of copy paper is laid over the coating material layer. These are then bonded and dried to obtain the insulating material (PTL2).

Further known is an insulating material comprising a silica xerogel and a carbon fiber mat (PTL3).

### Citation List

### Patent Literature

PTL 1: Japanese Patent No.4237253
PTL 2: Japanese Patent Unexamined Publication No.2013-100406
PTL 3: Japanese Patent Unexamined Publication No.2011-136859

### SUMMARY

The present disclosure is intended to provide an insulating material that has high insulation capable of effectively blocking a heat flow even in narrow small spaces while providing flame retardancy with which spreading of fire can be prevented. The present disclosure is also intended to provide a equipment using such an insulating material.

According to an aspect of the present disclosure, an insulating material is used that contains a silica xerogel, and a nonwoven fabric fiber capable of generating carbon dioxide by reacting with atmospheric oxygen at a temperature of 300°C or more. The nonwoven fabric fiber is of a fiber having a diameter of 1 to 30 µm. The nonwoven fabric fiber is an oxidized acrylic, and has a surface modified with a carboxyl group. According to another aspect of the present disclosure, a equipment is used that uses the insulating material installed as a part of a heat insulating or a cold insulating structure, or installed between a heat-generating part and a casing.

The insulating material of the aspect of the disclosure has a lower thermal conductivity than traditional insulating materials, and can exhibit a sufficient insulating effect in narrow spaces of electronic equipments, in-car equipments, and industrial equipments, and can effectively reduce transfer of heat from a heat-generating part to a casing. The insulating material of the aspect of the disclosure is flame retardant, and, in addition to the insulating effect, has the effect to prevent spreading of fire in case of thermal runaway or a fire.

### BRIEF DESCRIPTION OF THE DRAWINGS

FIG. 1A is a cross sectional view of an insulating material of First Embodiment.
FIG. 1B is a cross sectional view of an insulating material of First Embodiment.
FIG. 2 is a perspective view of a silica xerogel of the embodiment.
FIG. 3A is a diagram showing the chemical formula of a flame-retardant nonwoven fabric material of the embodiment.
FIG. 3B is a diagram showing the chemical formula of a flame-retardant nonwoven fabric material of the embodiment (not according to the invention).
FIG. 4 is a diagram showing a chemical structure of a surface of a fiber of the embodiment.
FIG. 5A is a diagram showing a physical structure of a fiber of the embodiment.
FIG. 5B is a diagram showing a physical structure of a fiber of the embodiment.
FIG. 6 is a diagram representing a method for producing the flame-retardant insulating material of the embodiment.
FIG. 7 is a diagram showing how flame is brought into contact with the insulating material produced in Example 1.
FIG. 8 is a diagram showing how flame is brought into contact with the insulating material produced in Comparative Example 1.
FIG. 9 shows SEM images of cross sections of the insulating materials produced in Example 1 and Comparative Example 2.
FIG. 10 is a diagram representing the relationship between the filling rate of the silica xerogel of the embodiment, and thermal conductivity.
FIG. 11 is a diagram representing the relationship between fiber diameter and thermal conductivity in the embodiment.
FIG. 12A is a cross sectional view of a flame-retardant insulating material of an embodiment.
FIG. 12B is a diagram representing a method for producing the flame-retardant insulating material of the embodiment.

### DESCRIPTION OF EMBODIMENTS

The following describes preferred embodiments of the present disclosure.

### First Embodiment

### Exemplary Structure of Flame-Retardant Insulating Material

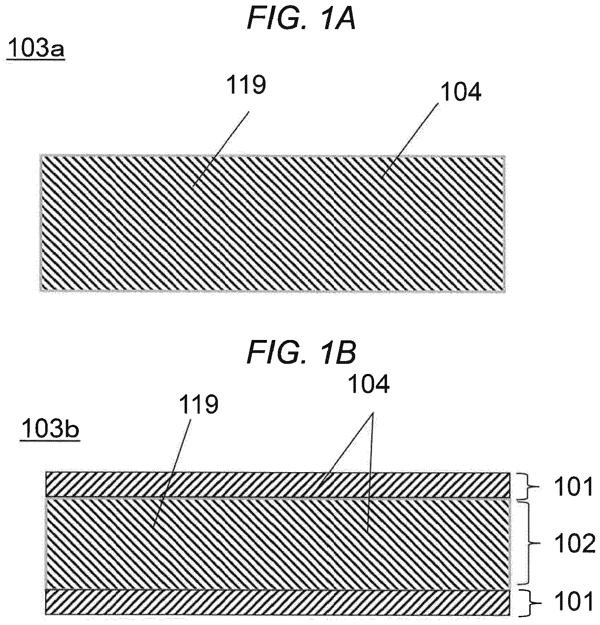

The cross sectional view in FIG. 1A shows an insulating material 103a of an embodiment. The insulating material 103a is a single layer of nonwoven fabric fiber 119 and silica xerogel 104.

The cross sectional view in FIG. 1B shows an insulating material 103b of the embodiment. The insulating material 103b has a three-layer structure configured from a composite layer 102 of nonwoven fabric fiber 119 and silica xerogel 104, and upper and lower silica xerogel layers 101 that contain the silica xerogel 104 but do not contain the nonwoven fabric fiber.

The insulating material 103a and the insulating material 103b use the same silica xerogel 104 and the same nonwoven fabric fiber 119. The insulating material 103a is essentially the same as the composite layer 102.

In the insulating material 103b, insulation can be provided by increasing the filling rate of the silica xerogel 104 in the composite layer 102. However, one of the upper and the lower silica xerogel layer 101, or both of these layers on the composite layer 102 may be absent, provided that the thermal conductivity falls in the desired range below.

The nonwoven fabric fiber 119 has a thermal conductivity of 0.030 to 0.060 W/mK. The silica xerogel 104 has a thermal conductivity of 0.010 to 0.015 W/mK. Accordingly, the insulating materials 103b and 103a have a thermal conductivity of 0.014 to 0.024 W/mK.

### Silica Xerogel 104

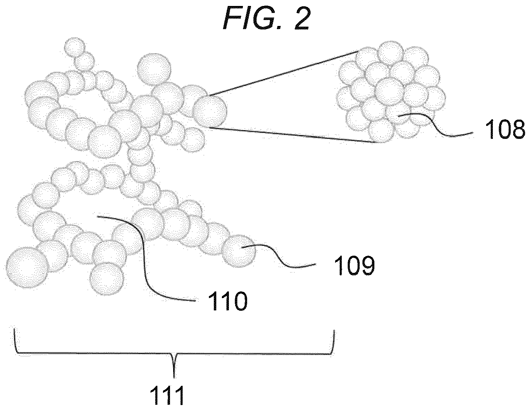

FIG. 2 shows a microstructure 111 of the silica xerogel 104 of the embodiment. The silica xerogel 104 has a porous structure of interconnected point-contact silica secondary particles 109 as an aggregate of silica primary particles 108, and the porous structure has pores 110 of several tens of nanometers. The microstructure 111 of the silica xerogel 104 is present in the composite layer 102, or in the upper and lower silica xerogel layers 101, or an inorganic binder layer 105.

### Thickness of Insulating Material

The insulating materials 103a and 103b have a thickness of 0.03 mm to 3.0 mm, preferably 0.05 mm to 1.0 mm.

When the insulating materials 103b and 103a have a thickness of less than 0.03 mm, the insulating effect in a thickness direction of the insulating material 103b becomes weak. The insulating material 103b can maintain the insulating effect in thickness direction when it has a thickness of 0.05 mm or more.

When thicker than 1.0 mm, the insulating materials 103a and 103b cannot be easily incorporated in today's thinner and smaller equipments.

### Content of Silica Xerogel 104 in Insulating Material

The optimum range of the weight fraction of the silica xerogel 104 in the total weight of the insulating materials 103a and 103b varies with the basis weight, the bulk density, and the thickness of the nonwoven fabric fiber 119, and there is no fixed value. However, the weight fraction of the silica xerogel 104 is typically at least 30 weight%. It becomes difficult to achieve a low thermal conductivity when the weight fraction of the silica xerogel 104 is less than 30 weight%. In the embodiment, the weight fraction of the silica xerogel 104 is 70 weight% or less. The insulating material 103b can still have a reduced thermal conductivity when the weight fraction of the silica xerogel 104 is higher than 70 weight%. However, in this case, the insulating material 103b lacks sufficient flexibility and strength, and the silica xerogel 104 may detach itself from the insulating material 103b after repeated use of the insulating material 103b.

### Basis Weight of Nonwoven Fabric Fiber 119

The nonwoven fabric fiber 119 is a fiber having a basis weight of 5 g/m² to 350 g/m². The numerical values will be described in the Examples below. Here, "basis weight" is the weight per unit area.

### Bulk Density of Nonwoven Fabric Fiber 119

From the standpoint of further reducing thermal conductivity by increasing the content of the silica xerogel 104 in the insulating material 103b, it is preferable that the nonwoven fabric fiber 119 have a bulk density of 100 kg/m³ to 500 kg/m³.

In order to form a nonwoven fabric as a continuous material with mechanical strength, the bulk density of the nonwoven fabric needs to be at least 100 kg/m³. When the bulk density of the nonwoven fabric is higher than 500 kg/m³, the spatial volume of the nonwoven fabric becomes smaller, and the amount of the silica xerogel 104 that can be filled becomes relatively smaller, with the result that the thermal conductivity increases. The numerical values will be described in the Examples below.

### Material of Nonwoven Fabric Fiber 119

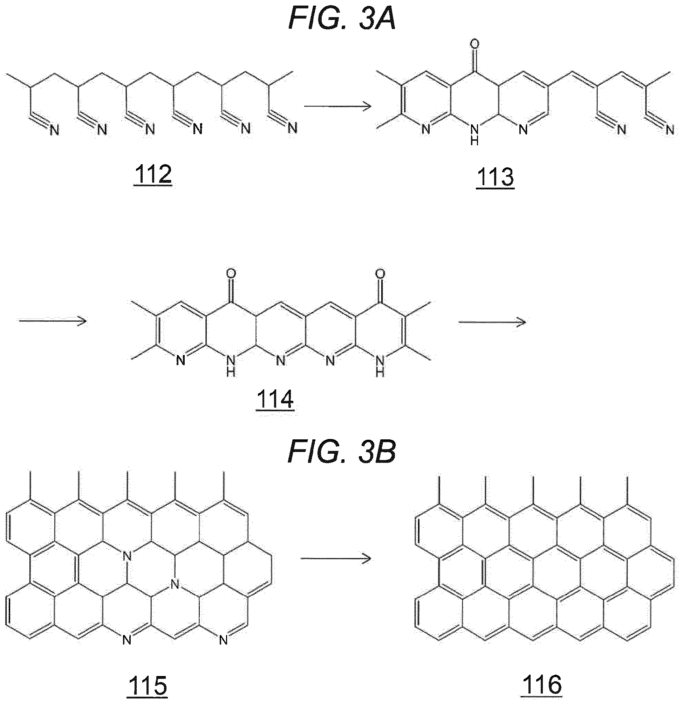

The nonwoven fabric fiber 119 is a carbon-containing nonwoven fabric fiber 119 capable of generating carbon dioxide by reacting with the atmospheric oxygen at a high temperature of 300°C or more. Chemical fibers are not desirable as they melt at temperatures below 300°C, and form a dark clump. The nonwoven fabric fiber 119 is described below using the structural formulae of FIG. 3A and FIG. 3B.

As shown in FIG. 3A, the nonwoven fabric fiber 119 is an oxidized acrylic 113 with a partly remaining nitrile group, or a completely cyclized oxidized acrylic 114. The oxidized acrylic can be obtained by heating polyacrylonitrile (PAN) 112 in the atmosphere at 200 to 300°C. However, polyacrylonitrile (PAN) 112 is not used as the nonwoven fabric fiber 119 because this compound burns itself when heated at higher temperatures.

Also not used as the nonwoven fabric fiber 119 are the carbon fiber 115 and the graphite fiber 116 shown in FIG. 3B.

Other nonwoven fabric fibers may be contained; however, the nonwoven fabric fiber 119 needs to be a main component of different nonwoven fabric fibers. Preferably, the nonwoven fabric fiber 119 is at least 50 volume% of all nonwoven fabric fibers. The nonwoven fabric fibers may be different nonwoven fabric fibers.

### Fiber Diameter of Nonwoven Fabric Fiber 119

For satisfying thermal conductivity, flame retardancy, and productivity at the same time, the nonwoven fabric fiber 119 used in the embodiment have a fiber diameter of 1 to 30 µm.

With a fiber diameter of less than 1 µm, the insulating materials 103a and 103b have a large specific surface area, and can generate more carbon dioxide. The insulating materials 103a and 103b also can achieve low thermal conductivity with such fibers because the solid component that transfers heat decreases. A drawback, however, is productivity.

With a fiber diameter of larger than 30 µm, the insulating material has a reduced specific surface area, and generates less carbon dioxide. In this case, an effective flame-retardancy effect cannot be obtained, and the solid component that transfers heat increases. This results in increased thermal conductivity in the insulating materials 103a and 103b.

### Chemical and Physical Structures of Fiber Surface of Nonwoven Fabric Fiber 119

For efficient generation of carbon dioxide, the nonwoven fabric fiber 119 uses the oxidized acrylic 113 with a partly remaining nitrile group or the completely cyclized oxidized acrylic 114, as mentioned above. An acid is used in the process of mixing the nonwoven fabric fiber 119 and the silica xerogel 104 (as will be described below in (7) Hydrophobization 1 (dipping in hydrochloric acid)).

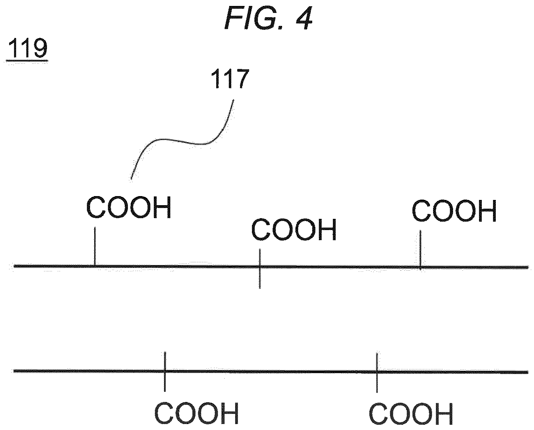

Here, the acid modifies the surface of the nonwoven fabric fiber 119 with carboxyl (-COOH) 117, as shown in the structure diagram of the nonwoven fabric fiber 119 in FIG. 4. The density of the carboxyl group 117 varies with the conditions of when the nonwoven fabric fiber 119 is dipped in a strong acid (acid concentration, time, and temperature) . The density of the functional group tends to increase as the concentration, time, and temperature increase.

As a result of primarily heating, the carboxyl group formed on the surface of the nonwoven fabric fiber 119 undergoes dehydrocondensation reaction in the process of forming the silica xerogel 104 (hydrophobization and drying).

A high density of carboxyl group 117 facilitates both an inter-fiber and an intra-fiber reaction in the nonwoven fabric fiber 119, causing the nonwoven fabric fiber 119 to fuse, and form a double strand (where the fibers cross).

Such a thick double strand formed by the nonwoven fabric fiber 119 becomes a heat conduction pathway, and is not desirable in terms of an insulating material design.

With a moderate to low density of carboxyl group, the dehydrocondensation reaction between the nonwoven fabric fibers 119 does not easily take place, and fewer double strands are formed. In order to reduce the dehydrocondensation reaction between the adjacent carboxyl groups on the surface of the same nonwoven fabric fiber 119, it is preferable that the nonwoven fabric fiber 119 have a gently curved hairpin loop structure 120 formed in parts of the fiber.

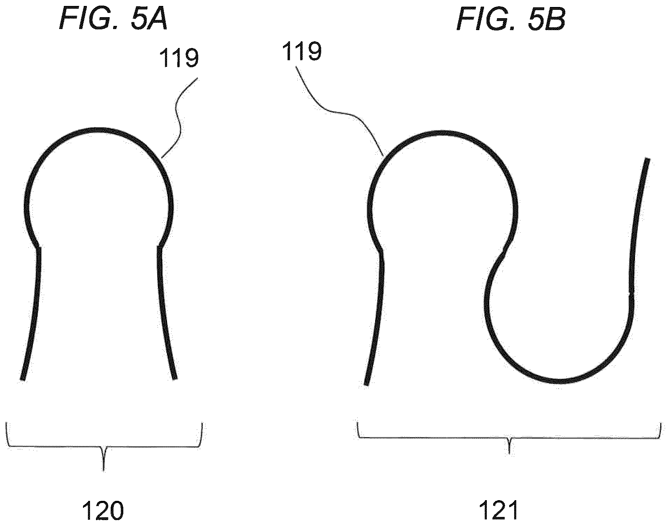

FIG. 5A shows a fiber with such a hairpin loop structure 120. Because the nonwoven fabric fiber 119 does not contact other nonwoven fabric fibers 119, binding of nonwoven fabric fibers 119 can be reduced. It is also preferable that the nonwoven fabric fiber 119 have a pseudoknot structure 121, which is a continuous structure of hairpin loop structures 120 joined together.

FIG. 5B shows a fiber having such a pseudoknot structure 121. The hairpin loop structure 120 and the pseudoknot structure 121, despite the diameter that does not differ from the diameter of the nonwoven fabric fiber 119, effectively add strength to the weak structure of the silica xerogel 104, which is light and has low elastic modulus, and is not suited as a structural material.

The hairpin loop structure 120 refers to a structure of a single fiber that is symmetric about a point on the fiber, and has a single bent portion (line symmetry).

The pseudoknot structure 121 refers to a structure of a single fiber that is bent side-by-side at two points on the fiber, and has two bent portions (rotational symmetry).

Preferably, the nonwoven fabric fiber 119 should have low bulk density and low basis weight, for the same reasons described above.

The loop structure is not limited to the hairpin loop structure, and may be an internal loop, a bulged loop, or a branched loop. That is, the loop may be any loop, provided that the fiber has a loop structure (a ring or a ring-like structure), or a curved portion, in at least a part of the fiber.

### Flame Retardancy Mechanism of Insulating Material

In a resin-base foam insulation material, the organic material typically decomposes under heat when brought close to flame. The burning organic material generates a large quantity of flammable gas, and the insulating material violently burns when the flammable gas ignites.

The following describes the mechanism by which the insulating materials 103a and 103b of the present embodiment are rendered flame retardant. The insulating materials 103a and 103b contain the silica xerogel 104 and the nonwoven fabric fiber 119. The surface of silica particles constituting the silica xerogel 104 is organically modified, and is hydrophobic. When the surface is heated to a high temperature of 300°C or more for extended time periods, the organic modifying group undergoes heat decomposition, and releases a large quantity of a flammable gas, for example, such as trimethylsilanol. The flammable gas may act as a combustion improver.

For example, in glass paper made of C glass, the base material itself is not combustible. However, when combined with the silica xerogel 104 of a large specific surface area (800 m²/g or more), the glass paper of C glass may burn as a result of ignition of the flammable gas generated in large quantity from the silica xerogel 104. C glass has a lower heat resistance than E glass, and, depending on the basis weight, contracts and deforms when heated to 750°C or more. In the insulating materials 103a and 103b of the embodiment containing the silica xerogel 104 and the nonwoven fabric fiber 119, the carbon in the nonwoven fabric fiber 119 reacts with the atmospheric oxygen in a high-temperature atmosphere of 300°C or more, and generates and releases a large quantity of carbon dioxide so that the flammable gas released from the silica xerogel 104 does not burn itself. Method of Production of Insulating Material 103b, and Raw Material used for Production

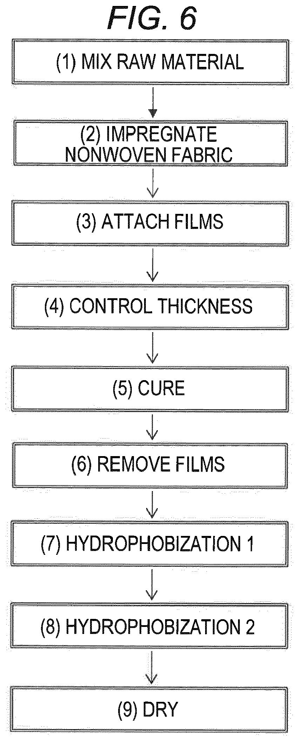

A method for producing the insulating material 103b is schematically represented in FIG. 6. The following describes exemplary production of the insulating material 103b, with reference to FIG. 6.

### (1) Mixing Raw Material

A sol solution is prepared by adding 1.4 weight parts of concentrated hydrochloric acid as a catalyst to a high molar silicate aqueous solution (Toso Sangyo Co., Ltd.; SiO₂ concentration = 14 wt%), and stirring the mixture. The raw material silica is not limited to high molar sodium silicate, and may be alkoxysilane or water glass (low molar ratio).

Examples of the acid include inorganic acids such as hydrochloric acid, nitric acid, sulfuric acid, hydrofluoric acid, sulfurous acid, phosphoric acid, phosphorous acid, hypophosphorous acid, chloric acid, chlorous acid, and hypochlorous acid; acidic phosphates such as acidic aluminum phosphate, acidic magnesium phosphate, and acidic zinc phosphate; and organic acids such as acetic acid, propionic acid, oxalic acid, succinic acid, citric acid, malic acid, adipic acid, and azelaic acid. The acid catalyst used is not particularly limited. However, preferred is hydrochloric acid from the standpoint of the strength of the gel skeleton, and the hydrophobicity of the silica xerogel 104.

The sol solution prepared by adding the acid catalyst to the high molar silicate aqueous solution is gelled. Preferably, the sol is turned into a gel in a sealed container so that the liquid solvent does not evaporate.

In forming a gel solution after adding an acid to the high molar silicate aqueous solution, the pH is preferably 4.0 to 8.0. The high molar silicate aqueous solution may fail to gel when the pH is less than 4.0, or more than 8.0, though it depends on the temperature.

### (2) Impregnation

The sol solution is poured onto the nonwoven fabric fiber 119 (an oxidized acrylic fiber, specified thickness = 400 µm, basis weight = 53 g/m², dimensions = 12 cm × 12 cm), and the nonwoven fabric is impregnated with the sol solution under the pressure of a hand roller. For impregnation, the sol solution is used in an amount in excess of the theoretical spatial volume of the nonwoven fabric fiber 119 (> 100%) . The theoretical spatial volume of the nonwoven fabric is calculated from the bulk density of the nonwoven fabric fiber 119. The material, the thickness, and the bulk density of the nonwoven fabric are not limited, as mentioned above. Impregnation of the nonwoven fabric may be accomplished by dipping a roll of the nonwoven fabric in the sol solution one after another, or by applying the sol solution to the nonwoven fabric, roll-to-roll, through a dispenser or a spray nozzle while feeding the nonwoven fabric at a constant speed. Preferred for productivity is the roll-to-roll method.

Contacting the raw material liquid to the nonwoven fabric fiber 119 under the pressure of a roller is an efficient way of quickly finishing the impregnation process.

### (3) Attaching Films

After impregnation with the sol solution, the nonwoven fabric is sandwiched between two PP films (thickness = 50 µm each, dimensions = B6), and allowed to stand at room temperature (23°C) for about 20 minutes to transform the sol into a gel. Waitting after gelling, the material and thickness of the films attached to the impregnated nonwoven fabric subjected to gelation, thickness control, and curing are not limited to those exemplified above. However, because the curing requires heat, the films are preferably made of a resin material having a maximum tolerable temperature of 100°C or more, and a coefficient of linear thermal expansion of 100 (x 10⁻⁶/°C) or less, for example, such as polypropylene (PP), and polyethylene terephthalate (PET).

### (4) Thickness Control

After checking that the gel has formed, the impregnated nonwoven fabric with the films is passed through a preset gap of 190 µm (including the film thickness) between two-axis rollers to squeeze out the excessive gel from the nonwoven fabric, and achieve a target thickness of 100 µm. The method used to control the thickness is not limited to this, and the thickness may be controlled by using a squeegee or a press.

### (5) Curing

The gel sheet with the films is put in a container, and kept in a 85°C/85% constant-temperature and constant-humidity vessel for 3 hours to allow silica particles to grow (through dehydrocondensation reaction of silanol) and form a porous structure.

Under ordinary pressure, the curing temperature is preferably 50 to 100°C, more preferably 60 to 90°C.

With a curing temperature of less than 50°C, transfer of the necessary heat to the silicate monomer (an active species of the reaction as in the gelation) may not take place, and the reaction may fail to promote growth of silica particles, with the result that it takes time before the curing sufficiently proceeds. In this case, the resulting wet gel will be weak, and may greatly contract when dried. That is, the desired silica xerogel 104 may not be obtained.

With a curing temperature of more than 100°C, the water in the container may evaporate, and separate from the gel, even when the container is sealed. This reduces the volume of the resulting wet gel, and the desired silica xerogel 104 may not be obtained.

With a curing temperature of 60 to 90°C, the reaction can promote moderate growth of silica particles without decreasing productivity, and the point-contact neck portions of the adjoining silica particles can have increased strength. With this temperature range, curing also can proceed without evaporation of moisture from the wet gel.

The curing time is preferably 0.5 to 6 hours, more preferably 1 to 3 hours, though it depends on the curing temperature. When the curing time is less than 0.5 hours, the gel wall may fail to develop sufficient strength. With a curing time of more than 6 hours, the gel wall strength improving effect of curing becomes weak, and productivity may decrease, instead of increasing. With a curing time of 1 to 3 hours, the gel wall strength can sufficiently improve without decreasing productivity.

With regard to curing conditions, the temperature and humidity are inseparable from time. Considering the balance between improvement of gel skeleton and productivity, it is preferable that curing be performed for 1 to 3 hours under 85°C and 85% conditions. In order to increase the pore volume and the average pore size of the xerogel, it is preferable to increase the gelation temperature and the curing temperature in the foregoing ranges, and to increase the total time of gelation and curing within the foregoing ranges. In order to make the pore volume and the average pore size of the silica xerogel 104 smaller, it is preferable to decrease the gelation temperature and the curing temperature in the foregoing ranges, and to decrease the total time of gelation and curing within the foregoing ranges.

### (6) Removing Films

The curing container is taken out of the thermostat bath, and allowed to cool to room temperature. The cured sample is then taken out of the container, and the films are removed.

### (7) Hydrophobization 1 (dipping in hydrochloric acid)

The gel sheet is dipped in hydrochloric acid (4 to 12 N), and allowed to stand at ordinary temperature (23°C) for at least 15 minutes to incorporate hydrochloric acid in the gel sheet.

### (8) Hydrophobization 2 (siloxane treatment)

The gel sheet is dipped in, for example, a mixture of octamethyltrisiloxane (silylation agent) and 2-propanol (IPA), and placed in a 55°C thermostat bath to allow reaction for 2 hours. As soon as the trimethylsiloxane bond starts to form, the gel sheet releases hydrochloric acid water, and the solution separates into two layers (the siloxane is on the top, and the hydrochloric acid water and 2-propanol are at the bottom).

### (9) Drying

The gel sheet is transferred to a 150°C thermostat bath, and dried for 2 hours.

The method for producing the insulating material 103b described above with reference to FIG. 6 is merely an example, and the method of production of the insulating material 103b is not limited to this.

### Examples

The present embodiment is described below by way of Examples. The present embodiment, however, is not limited to the following Examples. All reactions took place in the atmosphere.

### Evaluation

In Examples, the insulating material 103b was produced from nonwoven fabric fibers 119 of various basis weights (the weight of nonwoven fabric fiber 119 per unit area [g/m²]) or various thicknesses, and was measured for thermal conductivity and thickness.

The thermal conductivity of the insulating material 103b was measured with a heat flow meter HFM 436 Lamda (manufactured by NETZCH) and a TIM tester (manufactured by Analysis Tech).

The thickness was measured using a digimatic indicator H0530 (manufactured by Mitsutoyo Corporation), under a pressure of 7. 4 kPa. Measurements were made at 15 points within a plane of ten sheets of insulating material 103b (a total of 150 measurement points).

For evaluation of flammability, the insulating material was brought into direct contact with a flame, and evaluated for flammability.

Details of the conditions used in Examples and Comparative Examples will be described later. The results and conditions are presented in Table 1. Examples 3 and 4 are reference examples not according to the invention.

**Table 1**

| | Ex. 1 | Ex. 2 | Ex. 3 | Ex. 4 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|
| Material of nonwoven fabric fiber 119 | Oxidized acrylic | Oxidized acrylic | 80% Carbon fiber + 20% PET | 80% Carbon fiber + 20% PVA | PET | Oxidized acrylic | Oxidized acrylic | Oxidized acrylic | Oxidized acrylic | 80% Carbon fiber + 20% PVA |
| Limiting oxygen index of nonwoven fabric fiber 119 | 40 | 40 | 68 | 68 | 18 | 40 | 40 | 40 | 40 | 68 |
| Basis weight of nonwoven fabric fiber 119 (g/m²) | 53 | 20 | 30 | 10 | 105 | 53 | 53 | 53 | 53 | 10 |
| Thickness of nonwoven fabric fiber 119 (mm) | 0.241 | 0.108 | 0.45 | 0.13 | 0.902 | 0.193 | 0.218 | 0.219 | 0.241 | 0.13 |
| Filling rate of silica xerogel 104 (wt%) | 42.2 | 66.9 | 67.1 | 69.6 | 63.1 | 49.2 | 47.8 | 46.4 | 0 | 0 |
| Thickness of insulating material 103b (mm) | 0.305 | 0.246 | 0.503 | 0.2 | 1.05 | 0.656 | 0.501 | 0.538 | 0,241 | 0.13 |
| Diameter of largest nonwoven fabric fiber 119 (µm) | 15 | 15 | 9 | 10 | 16 | 35 | 32 | 31 | 15 | 10 |
| Thermal conductivity of insulating material 103b (W/mK) | 0.022 | 0.018 | 0.019 | 0.021 | 0.019 | 26.26 | 25.85 | 26.63 | 0.042 | 0.034 |
| Evaluation of thermal conductivity of insulating material 103b | Acceptable | Acceptable | Acceptable | Acceptable | Acceptable | Poor | Poor | Poor | Poor | Poor |
| Flame evaluation of insulating material 103b (evaluation of flammability | Acceptable | Acceptable | Acceptable | Acceptable | Poor | Acceptable | Acceptable | Acceptable | Acceptable | Acceptable |
| Overall evaluation of insulating material 103b | Acceptable | Acceptable | Acceptable | Acceptable | Poor | Poor | Poor | Poor | Poor | Poor |

### Test Criteria

The insulating material was determined as being acceptable when it had a thermal conductivity of 0.024 W/mK or less, and not flammable even when brought into contact with flame. The overall evaluation result is acceptable with both of these conditions satisfied.

The thermal conductivity of still air at ordinary temperature is said to be typically about 0.026 W/mK. Accordingly, the insulating material 103b needs to have a smaller thermal conductivity than still air to effectively block a flow of heat.

For this reason, the insulating material 103b was determined as being acceptable when it had a thermal conductivity of 0.024 W/mK or less, a value about 10% smaller than the thermal conductivity of still air. The advantage against air insulation will be lost when the thermal conductivity is larger than 0.024 W/mK, a value that does not greatly differ from the thermal conductivity of still air.

In the flammability test, the insulating material was determined as being poor when it burned after several seconds under the flame, and acceptable when it did not burn under the same conditions.

### General Information

Examples 1 to 4 and Comparative Examples 1 to 4 are configured from the insulating material 103b (the composite layer 102 and the silica xerogel layer 101) shown in FIGS. 1A and 1B. Comparative Examples 5 and 6 solely use the nonwoven fabric fiber 119.

Comparative Example 1 represents an insulating material in which the nonwoven fabric fiber 119 is configured from polyester. In Comparative Examples 2 to 4, a flame-retardant oxidized acrylic was used as the nonwoven fabric fiber 119, and samples with a fiber diameter of more than 30 µm were evaluated. The evaluation results for Comparative Examples 5 and 6 are the results for flame-retardant nonwoven fabrics that did not contain the silica xerogel 104. In the following, the concentrations are in weight%.

### Example 1

A sol solution was prepared by adding 1.4 weight parts of concentrated hydrochloric acid as a catalyst to a high molar silicate aqueous solution (Toso Sangyo Co., Ltd.; SiO₂ concentration = 14%), and stirring the mixture. The sol solution was then poured onto the nonwoven fabric fiber 119 (an oxidized acrylic fiber, thickness = 0.241 mm, basis weight = 53 g/m²), and the nonwoven fabric was impregnated with the sol solution. After impregnation with the sol solution, the nonwoven fabric was sandwiched between two PP films (thickness = 50 µm each), and allowed to stand at room temperature (23°C) for 20 minutes to transform the sol into a gel. After checking that the gel had formed, the impregnated nonwoven fabric with the films was passed through a preset gap of 0.3 mm (including the film thickness) between two-axis rollers to squeeze out the excessive gel from the nonwoven fabric, and achieve a target thickness of 0.30 mm.

The gel sheet with the films was put in a container, and kept in a 85°C/85% constant-temperature and constant-humidity vessel for 3 hours to allow silica particles to grow (through dehydrocondensation reaction of silanol) and form a porous structure. The curing container was taken out of the thermostat bath, and allowed to cool to room temperature. The cured sample was then taken out of the container, and the films were removed.

The gel sheet was dipped in hydrochloric acid (6 N), and allowed to stand at ordinary temperature (23°C) for 60 minutes to incorporate hydrochloric acid in the gel sheet. The gel sheet was dipped in a mixture of octamethyltrisiloxane (silylation agent) and 2-propanol (IPA), and placed in a 55°C thermostat bath to allow reaction for 2 hours. As soon as the trimethylsiloxane bond started to form, the gel sheet released hydrochloric acid water, and the solution separated into two layers (the siloxane is on the top, and the hydrochloric acid water and 2-propanol are at the bottom). The gel sheet was transferred to a 150°C thermostat bath, and dried for 2 hours in the atmosphere.

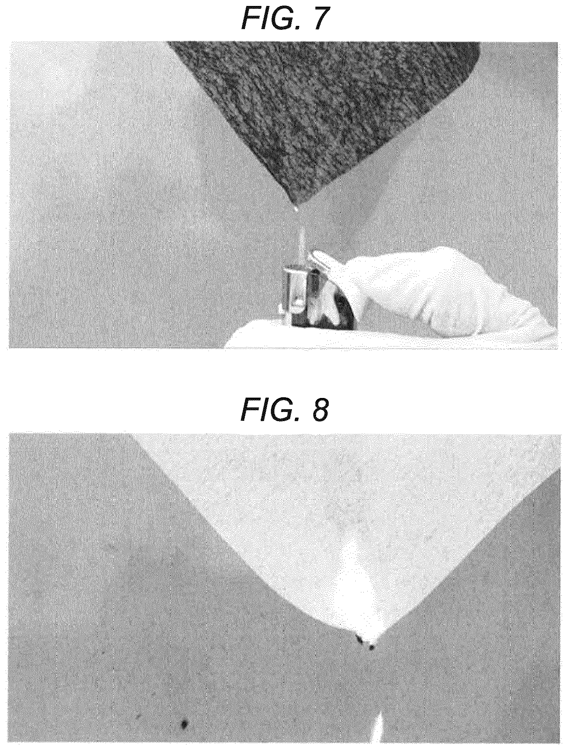

The resulting insulating material 103b had an average thickness of 0.305 mm, and a thermal conductivity of 0.022 W/mK. The silica xerogel 104 had a filling rate of 42.2 wt%. FIG. 7 shows how flame was brought into contact with the insulating material produced in Example 1. As can be seen, the insulating material did not burn at all.

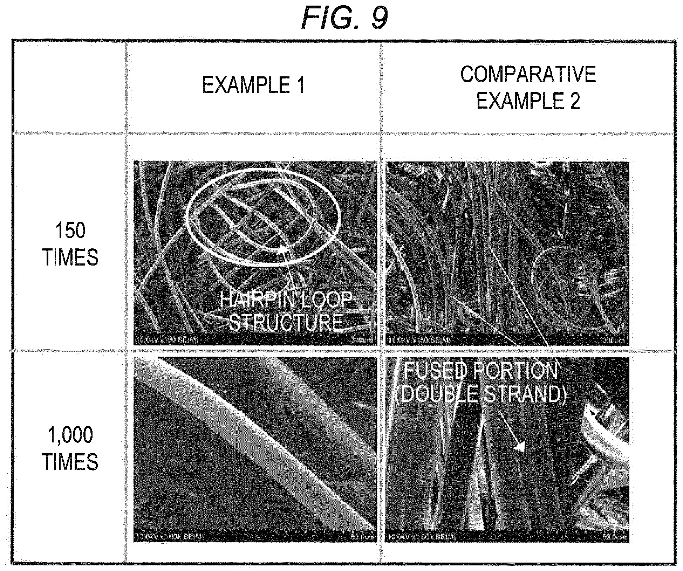

FIG. 9 shows scanning electron micrographs of the flame-retardant insulating materials (a composite of the nonwoven fabric fiber 119 of oxidized acrylic, and the silica xerogel 104) produced in Example 1 and Comparative Example 2. The fiber of Example 1 is a fiber treated with 6 N hydrochloric acid. The fiber of Comparative Example 2 is a fiber treated with 12 N hydrochloric acid. The insulating material produced in Example 1 had a cross sectional structure (150 times) with a hairpin loop structure. The individual fibers were independent, and the fiber diameter was 15 µm.

### Example 2

A sheet was produced under the same conditions used in Example 1, except that the nonwoven fabric fiber 119 had an average thickness of 0.108 mm and a basis weight of 20 g/m², and that the raw material was used in half the amount accordingly.

The resulting insulating material 103b had an average thickness of 0.246 mm, and a thermal conductivity of 0.0180 W/mK. The silica xerogel 104 had a filling rate of 66.9 wt%. The insulating material did not burn at all even when brought into contact with flame, as in Example 1.

### Example 3 (not according to the invention)

A sheet was produced under the same conditions used in Example 1, except that the nonwoven fabric fiber 119 contained 20% PET and 80% carbon fiber, and had an average thickness of 0.450 mm and a basis weight of 30 g/m², and that the raw material was used twice the amount accordingly. Because carbon fibers do not occur as tangled fibers, and easily become loose, Example 3 used a carbon fiber base material that contained 20% PET as a binder so that a self-standing nonwoven fabric base material was obtained.

The resulting insulating material 103b had an average thickness of 0.503 mm, and a thermal conductivity of 0.019 W/mK. The silica xerogel 104 had a filling rate of 67.1 wt%. The insulating material did not burn at all even when brought into contact with flame, as in Example 1.

### Example 4 (not according to the invention)

A sheet was produced under the same conditions used in Example 1, except that the nonwoven fabric fiber 119 contained 20% PVA and 80% carbon fiber, and had an average thickness of 0.130 mm and a basis weight of 10 g/m², and that the raw material was used in half the amount accordingly. Because carbon fibers do not occur as tangled fibers, and easily become loose, Example 4 used a carbon fiber base material that contained 20% PVA as a binder so that a self-standing nonwoven fabric base material was obtained.

The resulting insulating material 103b had an average thickness of 0.200 mm, and a thermal conductivity of 0.017 W/mK. The silica xerogel 104 had a filling rate of 69.6 wt%. The insulating material did not burn at all even when brought into contact with flame, as in Example 1.

### Comparative Example 1

A sheet was produced under the same conditions used in Example 1, except that PET (thickness = 0.902 mm, basis weight = 105 g/m²) was used for the nonwoven fabric fiber 119.

The resulting insulating material had an average thickness of 1.05 mm, and a thermal conductivity of 0.0189 W/mK. The silica xerogel 104 had a filling rate of 63.1 wt%. FIG. 8 shows how flame was brought into contact with the insulating material produced in Comparative Example 1. As can be seen, the insulating material easily burned.

### Comparative Example 2

A sheet was produced under the same conditions used in Example 1, except that the gel sheet was dipped in 12 N hydrochloric acid, and allowed to stand at ordinary temperature (23°C) for 72 hours to incorporate hydrochloric acid in the gel sheet.

The resulting insulating material 103b had an average thickness of 0.656 mm, and a thermal conductivity of 0.02626 W/mK. The silica xerogel 104 had a filling rate of 49.2 wt%.

### Comparative Example 3

A sheet was produced under the same conditions used in Example 1, except that the gel sheet was dipped in 12 N hydrochloric acid, and allowed to stand at ordinary temperature (23°C) for 24 hours to incorporate hydrochloric acid in the gel sheet.

The resulting insulating material 103b had an average thickness of 0.501 mm, and a thermal conductivity of 0.02585 W/mK. The silica xerogel 104 had a filling rate of 47.8 wt%. The insulating material did not burn at all even when brought into contact with flame, as in Example 1, but did not satisfy the required thermal conductivity of 0.024 W/mK or less. Observation of the cross sectional structure of the insulating material of Comparative Example 3 revealed that many fibers fused together, and formed double strands. The double-stranded fiber had a diameter of more than 30 µm.

### Comparative Example 4

A sheet was produced under the same conditions used in Example 1, except that the gel sheet was dipped in 12 N hydrochloric acid, and allowed to stand at ordinary temperature (23°C) for 60 minutes to incorporate hydrochloric acid in the gel sheet.

The resulting insulating material 103b had an average thickness of 0.538 mm, and a thermal conductivity of 0.02663 W/mK. The silica xerogel 104 had a filling rate of 46.4 wt%. The insulating material did not burn at all even when brought into contact with flame, as in Example 1, but did not satisfy the required thermal conductivity of 0.024 W/mK or less. Observation of the cross sectional structure of the insulating material revealed that many adjoining two fibers fused together, and formed thick fiber portions.

### Comparative Example 5

An insulating material was produced without mixing the silica xerogel 104 into the nonwoven fabric fiber 119 of oxidized acrylic having a thickness of 0.241 mm and a basis weight of 53 g/m². The insulating material had a measured thermal conductivity of 0.042 W/mK.

### Comparative Example 6

A nonwoven fabric fiber 119 containing 20% polyester and 80% carbon fiber, and having an average thickness of 0.130 mm and a basis weight of 10 g/m² was used, and an insulating material was produced without mixing the silica xerogel 104 into the nonwoven fabric fiber 119. The insulating material had a measured thermal conductivity of 0.034 W/mK.

### Results

### (1) Comparison of Example 1 and Comparative Example 2

FIG. 9 shows scanning electron micrographs of the insulating materials (a composite of the nonwoven fabric fiber 119 of oxidized acrylic, and the silica xerogel 104) produced in Example 1 and Comparative Example 2. The fiber of Example 1 is a fiber treated with 6 N hydrochloric acid. The fiber of Comparative Example 2 is a fiber treated with 12 N hydrochloric acid. The insulating material of Comparative Example 2 did not burn at all even when brought into contact with flame, as in Example 1. However, the insulating material of Comparative Example 2 did not satisfy the required thermal conductivity of 0.024 W/mK or less. Observation of the cross sectional structure of the insulating material of Comparative Example 2 revealed that many adjoining two fibers fused together, and formed thick fiber portions, as can be seen in the SEM image of FIG. 9 (1,000 times magnification). The fiber diameter of the fused portion was 35 µm. The result suggests that oxidation occurred at the oxidized acrylic fiber surface, and caused the fibers to melt and fuse as a result of the dipping of the gel sheet in 12 N hydrochloric acid. The poor thermal conductivity is probably a result of an increased heat transfer path due to the increased diameter of the fused fibers.

### (2) Review

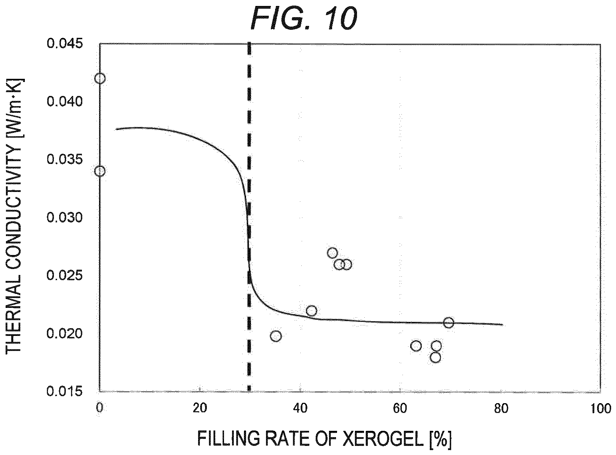

The insulating materials of Examples 1 to 4 had a very low thermal conductivity of 0.018 to 0.022 W/mK, and did not burn even when brought into contact with flame. FIG. 10 represents the relationship between the filling rate (weight%) of silica xerogel 104, and the thermal conductivity of the insulating material. It can be seen that there is a correlation between the filling rate of silica xerogel 104 and thermal conductivity, and that preferably at least 30 weight% of silica xerogel 104 is needed to satisfy the required thermal conductivity of 0.024 W/mK or less (FIG. 10).

From the standpoint of the strength of the insulating material, a filling rate of silica xerogel 104 higher than 80% is disadvantageous because it causes partial formation of a silica xerogel layer 101 without effective reinforcement by the nonwoven fabric fiber 119, and makes the silica xerogel 104 easily breakable or detachable. Table 2 summarizes how the filling rate of silica xerogel 104 is related to thermal conductivity, and to the amount of detached gel. As can be seen, the filling rates of 30 weight% and 80 weight% are critically meaningful for the silica xerogel 104.

**Table 2**

| Xerogel content (weight%) | Less than 40 | 40 to 70 | More than 70 |
|---|---|---|---|
| Thermal conductivity | High | Moderate | Low |
| Detached gel amount | Small | Moderate | Large |

From the standpoint of not only thermal conductivity but strength, the preferred range of the filling rate of silica xerogel 104 for appropriately satisfying these two properties is 30 weight% to 80 weight%.

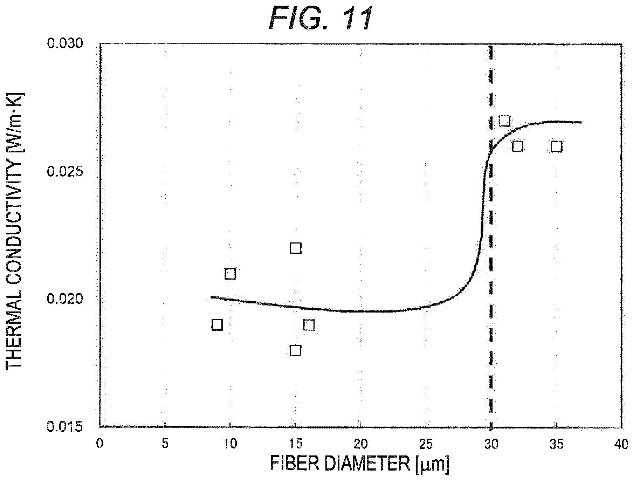

FIG. 11 represents the relationship between the maximum fiber diameter of the nonwoven fabric fiber 119 constituting the insulating material, and the thermal conductivity of the insulating material. As can be seen, there is a correlation between maximum fiber diameter and thermal conductivity, and the thermal conductivity decreases as a result of formation of an increased heat transfer path when the fiber diameter is larger than 30 µm, even when the same oxidized acrylic base material used in Examples 1 and 2 was used (FIG. 11).

According to the invention, the fiber diameter is therefore 30 µm or less.

Taken together, in order to satisfy both high insulation and high flame retardancy, it is preferable that the nonwoven fabric fiber 119 have a fiber diameter of 30 µm or less and that the silica xerogel 104 have a filling rate of 30 weight% to 80 weight%.

### Second Embodiment

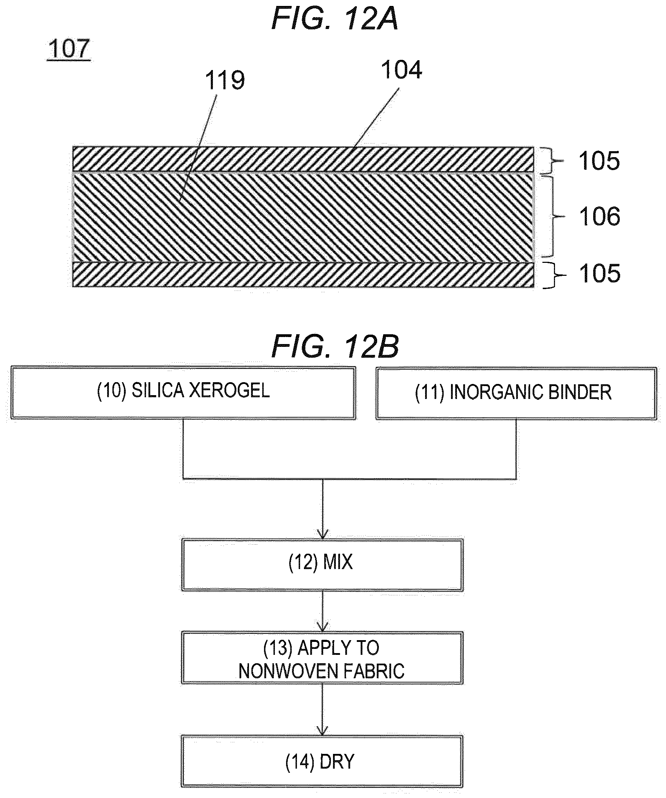

An insulating material 107 of another embodiment is shown in the cross sectional view of FIG. 12A. The insulating material 107 has a three-layer structure configured from a nonwoven fabric fiber layer 106 that contains the nonwoven fabric fiber 119 but does not contain the silica xerogel 104, and upper and lower inorganic binder layers 105 containing the silica xerogel 104 bound together with an inorganic binder. Anything that is not described is as described in First Embodiment. The silica xerogel 104 and the nonwoven fabric fiber 119 are not in direct contact with each other; however, both are present in the same insulating material 107 . The effects obtained in First Embodiment also can be obtained with this structure.

This structure can be formed more easily than the insulating material 103b of First Embodiment. Specifically, the insulating material 103b can be formed by simply applying a mixture of the inorganic binder and the silica xerogel 104 to the nonwoven fabric fiber 119. Because the silica xerogel 104 and the nonwoven fabric fiber 119 are separated from each other, the foregoing structure allows for more freedom in the way the nonwoven fabric fiber 119 and the silica xerogel 104 are used.

The insulating material 107 does not differ from the insulating material 103b with regard to properties such as thickness and components, and the concentration of the silica xerogel 104.

### Method of Production of Insulating Material 107

The method of production is the same as the method for producing the insulating material 103b of First Embodiment, except for the matter described below.

FIG. 12B schematically represents a method for producing the insulating material 107. A low-density powder material containing a porous powder such as the silica xerogel 104 is mixed with an inorganic binder, and the mixture is applied to a flame-retardant nonwoven fabric fiber 119. The assembly is then dried to obtain the insulating material 107. The inorganic binder is a binder for binding the low-density powder material and the nonwoven fabric fiber 119 to each other, and is typically configured from a main component, a curing agent, and a filler. The inorganic binder may be a known inorganic binder.

The mixture is applied to both surfaces of the nonwoven fabric fiber 119 in a predetermined thickness, and dried. This completes the insulating material 107. The silica xerogel 104 is preferably one having a thermal conductivity of 0.010 to 0.015 W/mK, and an average particle size of 5 to 50 µm. The mixture may be applied to both surfaces of the nonwoven fabric fiber 119 at the same time, or one at a time in an orderly fashion. However, the way the mixture is applied and dried is not limited. The nonwoven fabric fiber 119 and the silica xerogel 104 are the same as in First Embodiment. Anything that is not described is the same as in First Embodiment.

### Final Note

First Embodiment and Second Embodiment may be combined.

The silica xerogel 104 and the nonwoven fabric fiber 119 are not necessarily required to reside in the same layer, as long as these are present in the same insulating material.

The insulating materials of the embodiments of the present disclosure are preferably installed in various equipments as a part of a heat insulating or a cold insulating structure, or between a heat-generating part and a casing of various equipments.

The percentage is by weight, unless otherwise specifically stated.

### INDUSTRIAL APPLICABILITY

The insulating materials of the embodiments can exhibit a sufficient insulating effect in narrow spaces of electronic equipments, in-car equipments, and industrial equipments, and can be used in a wide range of applications. The applicable areas include all products that involves heat, for example, such as information equipments, portable equipments, displays, and electric components.

### REFERENCE MARKS IN THE DRAWINGS

- 101: silica xerogel layer
- 102: composite layer
- 103a, 103b: insulating material
- 104: silica xerogel
- 105: inorganic binder layer
- 106: nonwoven fabric fiber layer
- 107: insulating material
- 108: silica primary particles
- 109: silica secondary particles
- 110: pores
- 111: microstructure of the silica xerogel
- 112: polyacrylonitrile (PAN)
- 113: oxidized acrylic
- 114: oxidized acrylic
- 115: carbon fiber
- 116: graphite fiber
- 117: carboxyl group
- 119: nonwoven fabric fiber
- 120: hairpin loop structure
- 121: pseudoknot structure

## Claims

1. An insulating material comprising:
a silica xerogel (104); and
a nonwoven fabric fiber (119) capable of generating carbon dioxide by reacting with atmospheric oxygen at a temperature of 300°C or more,
wherein the nonwoven fabric fiber is of a fiber having a diameter of 1 to 30 µm, the nonwoven fabric fiber is an oxidized acrylic (113, 114), and the nonwoven fabric fiber (119) has a surface modified with a carboxyl group (117).

2. The insulating material according to claim 1, wherein the silica xerogel is contained in a content of 30 to 80 weight%.

3. The insulating material according to claim 1, wherein single fibers of the nonwoven fabric fiber have a curved portion.

4. The insulating material according to claim 1, wherein the silica xerogel is an organically modified silica xerogel that generates a flammable gas at 300°C or more.

5. The insulating material according to claim 1, further comprising:
a composite layer (102) containing the nonwoven fabric fiber (119) and the silica xerogel (104); and
a silica xerogel layer (101) containing the silica xerogel without containing the nonwoven fabric fiber, and laminated on the composite layer (102).

6. The insulating material according to claim 1, further comprising:
a nonwoven fabric fiber layer (106) containing the nonwoven fabric fiber (119) without containing the silica xerogel; and
an inorganic binder layer (105) formed on one surface or both surfaces of the nonwoven fabric fiber layer (106) , and containing the silica xerogel (104)bound by an inorganic binder.

7. An equipment comprising the insulating material of claim 1 installed as a part of a heat insulating or a cold insulating structure, or installed between a heat-generating part and a casing.

## Patentansprüche

1. Isoliermaterial umfassend:
ein Kieselsäure-Xerogel (104); und
eine Vliesfaser (119), die durch Reaktion mit Luftsauerstoff bei einer Temperatur von 300°C oder mehr Kohlendioxid erzeugen kann,
wobei die Vliesfaser aus einer Faser mit einem Durchmesser von 1 bis 30 µm besteht, die Vliesfaser ein oxidiertes Acryl (113, 114) ist, und die Vliesfaser (119) eine mit einer Carboxylgruppe (117) modifizierte Oberfläche aufweist.

2. Isoliermaterial nach Anspruch 1, wobei das Kieselsäure-Xerogel mit einem Anteil von 30 bis 80 Gew.-% enthalten ist.

3. Isoliermaterial nach Anspruch 1, wobei einzelne Fasern der Vliesfaser einen gekrümmten Abschnitt aufweisen.

4. Isoliermaterial nach Anspruch 1, wobei das Kieselsäure-Xerogel ein organisch modifiziertes Kieselsäure-Xerogel ist, das bei 300°C oder mehr ein brennbares Gas erzeugt.

5. Isoliermaterial nach Anspruch 1, ferner umfassend:
eine Verbundschicht (102), die die Vliesfaser (119) und das Kieselsäure-Xerogel (104) enthält; und
eine Kieselsäure-Xerogel-Schicht (101), die das Kieselsäure-Xerogel enthält, ohne die Vliesfaser zu enthalten, und die auf die Verbundschicht (102) laminiert ist.

6. Isoliermaterial nach Anspruch 1, ferner umfassend:
eine Vliesfaserschicht (106), die die Vliesfaser (119) enthält, ohne das Silica-Xerogel zu enthalten; und
eine anorganische Binderschicht (105), die auf einer Oberfläche oder beiden Oberflächen der Vliesfaserschicht (106) gebildet ist, und das Kieselsäure-Xerogel (104) enthält, das durch ein anorganisches Bindemittel gebunden ist.

7. Ausrüstung umfassend das Isoliermaterial nach Anspruch 1, das als Teil einer wärmeisolierenden oder kälteisolierenden Struktur diese ausrüstet, oder das zwischen einem wärmeerzeugenden Teil und einem Gehäuse ausrüstet.

## Revendications

1. Matériau isolant comprenant :
un xérogel de silice (104) ; et
une étoffe non tissée de fibres (119) capable de générer du dioxyde de carbone par réaction avec l'oxygène atmosphérique à une température de 300°C ou plus,
dans lequel l'étoffe non tissée de fibres est en des fibres ayant un diamètre de 1 à 30 µm, l'étoffe non tissée de fibres est un acrylique oxydé (113, 114), et l'étoffe non tissée de fibres (119) a une surface modifiée par un groupe carboxyle (117).

2. Matériau isolant selon la revendication 1, dans lequel le xérogel de silice est contenu en une proportion de 30 à 80 % en poids.

3. Matériau isolant selon la revendication 1, dans lequel des fibres isolées de l'étoffe non tissée de fibres ont une partie incurvée.

4. Matériau isolant selon la revendication 1, dans lequel le xérogel de silice est un xérogel de silice modifié par un composant organique qui génère un gaz inflammable à 300°C ou plus.

5. Matériau isolant selon la revendication 1, comprenant en outre :
une couche composite (102) contenant l'étoffe non tissée de fibres (119) et le xérogel de silice (104) ; et
une couche de xérogel de silice (101) contenant le xérogel de silice sans contenir l'étoffe non tissée de fibres, et stratifiée sur la couche composite (102).

6. Matériau isolant selon la revendication 1, comprenant en outre :
une couche d'étoffe non tissée de fibres (106) contenant l'étoffe non tissée de fibres (119) sans contenir le xérogel de silice ; et
une couche de liant inorganique (105) formée sur une surface ou les deux surfaces de la couche d'étoffe non tissée de fibres (106), et contenant le xérogel de silice (104) lié par un liant inorganique.

7. Equipement comprenant le matériau isolant de la revendication 1 installé en tant que partie d'une structure isolant de la chaleur ou isolant du froid, ou installé entre une partie génératrice de chaleur et une enceinte.
